# EUROPEAN PATENT SPECIFICATION

(11) **EP 3 681 055 B1**
(45) Date of publication and mention of the grant of the patent: **29.05.2024**
(21) Application number: 20150826.4
(22) Date of filing: 09.01.2020
(51) Int. Cl.: H04B 7/06

(54) **BEAM PAIR LINK SELECTION**
STRAHLPAARVERBINDUNGSAUSWAHL
SÉLECTION DE LIAISON DE PAIRE DE FAISCEAU

(30) Priority: 11.01.2019 US 201962791344 P
(43) Date of publication of application: 15.07.2020
(73) Proprietor: Nokia Technologies Oy, 02610 Espoo (FI)
(72) Inventor: HOOLI, Kari, 90620 Oulu (FI); TIIROLA, Esa, 90620 Oulu (FI); HAKOLA, Sami-Jukka, 90450 Kempele (FI)
(74) Representative: Script IP Limited

(56) References cited:
- WO-A1-2018/144384
- LG ELECTRONICS: "Discussion on UL beam management", 3GPP DRAFT; R1-1710282 DISCUSSION ON UL BEAM MANAGEMENT_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, P.R. China; 20170627 - 20170630 17 June 2017 (2017-06-17), XP051304913, Retrieved from the Internet: URL:http://www.3gpp.org/ftp/tsg_ran/WG1_RL 1/TSGR1_AH/NR_AH_1706/Docs/ [retrieved on 2017-06-17]

## Description

### TECHNICAL FIELD

Some embodiments may generally relate to mobile or wireless telecommunication systems, such as Long Term Evolution (LTE) or fifth generation (5G) radio access technology or new radio (NR) access technology, or other communications systems. For example, certain embodiments may relate to NR uplink (UL) scheduling, such as in grant free operation or configured grants.

### BACKGROUND

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. Fifth generation (5G) wireless systems refer to the next generation (NG) of radio systems and network architecture. 5G is mostly built on a new radio (NR), but the 5G (or NG) network can also build on E-UTRA radio. It is estimated that NR will provide bitrates on the order of 10-20 Gbit/s or higher, and will support at least enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. It is noted that, in 5G, the nodes that can provide radio access functionality to a user equipment (i.e., similar to Node B in UTRAN or eNB in LTE) may be named gNB when built on NR radio and may be named NG-eNB when built on E-UTRA radio.

WO 2018/144384 A1 discloses, relating to its Figure 2, that, at 204, the TRP 104 may acquire initial UL Tx/Rx beam pair information. The initial UL Tx/Rx beam pair information may include information to identify a UL Tx beam to be used by the UE 108 and a UL Rx beam to be used by the TRP 104. The information may include, for example, a beam index of the UL Tx beam, a beam index of the UL Rx beam, a beam index of a beam pair link that includes both a UL Tx beam and a UL Rx beam, or other UL Rx/Tx beam parameters.

### BRIEF DESCRIPTION

The invention is set out in the appended set of claims.

According some aspects, there is provided the subject matter of the independent claims. Some further aspects are defined in the dependent claims.

### LIST OF THE DRAWINGS

For proper understanding of embodiments, reference should be made to the accompanying drawings, wherein:
Fig. 1 illustrates an example of a cell with multiple TRPs and UEs, with multiple beam pair links between the gNB and UE,which is not encompassed by the wording of the claims but are considered to be useful for understanding the invention.
Fig. 2 illustrates an example of transmit (Tx) beam selection in codebook based transmission, which is not encompassed by the wording of the claims but are considered to be useful for understanding the invention.
Fig. 3 illustrates an example of Tx beam selection in non-codebook based transmission, which is not encompassed by the wording of the claims but are considered to be useful for understanding the invention.
Fig. 4a illustrates an example operation of baseline UE autonomous beam pair link selection for even gNB beams, which is not encompassed by the wording of the claims but are considered to be useful for understanding the invention..
Fig. 4b illustrates an example operation of baseline UE autonomous beam pair link selection for odd gNB beams, which is not encompassed by the wording of the claims but are considered to be useful for understanding the invention.
Fig. 5a illustrates an example of CG PUSCH operation for even gNB beams, which is not encompassed by the wording of the claims but are considered to be useful for understanding the invention..
Fig. 5b illustrates an example of CG PUSCH operation for odd gNB beams, which is not encompassed by the wording of the claims but are considered to be useful for understanding the invention..
Fig. 6a illustrates an example flow diagram of a method, according to one embodiment;
Fig. 6b illustrates an example flow diagram of a method, according to an embodiment;
Fig. 7a illustrates an example block diagram of an apparatus, according to an embodiment; and
Fig. 7b illustrates an example block diagram of an apparatus, according to an embodiment.

### DETAILED DESCRIPTION

It will be readily understood that the components of certain example embodiments, as generally described and illustrated in the figures herein, may be arranged and designed in a wide variety of different configurations. Thus, the following detailed description of some embodiments of systems, methods, apparatuses, and computer program products for beam pair link selection and/or indication, is not intended to limit the scope of certain embodiments but is representative of selected embodiments.

The features, structures, or characteristics of embodiments described throughout this specification may be combined in any suitable manner in one or more embodiments. For example, the usage of the phrases "certain embodiments," "some embodiments," or other similar language, throughout this specification refers to the fact that a particular feature, structure, or characteristic described in connection with an embodiment may be included in at least one embodiment. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more example embodiments.

Additionally, if desired, the different functions or steps discussed below may be performed in a different order and/or concurrently with each other. Furthermore, if desired, one or more of the described functions or steps may be optional or may be combined. As such, the following description should be considered as merely illustrative of the principles and teachings of certain embodiments, and not in limitation thereof.

Embodiments relate to 3GPP NR UL scheduling and, for example, grant free operation or configured grants. Some embodiments may be directed to beam-based system operation at higher frequency bands.

At higher frequency bands, a multi- transmission/reception point (TRP) cell deployment is considered important to provide multiple beam pair links between a gNB and UE to provide robustness and diversity against blockages typical when either one or both ends of the radio link operate using narrow radio beams, with the principle that at least one beam pair link would be "working" between the gNB and UE (meaning that gNB and UE can communicate over the beam pair link at reasonable quality and throughput) at any time of an active connection. In certain embodiments, a beam pair link may refer to a pair comprising a transmit (Tx) beam at gNB (or TRP) and receive (Rx) beam at UE in downlink, and to a pair comprising a transmit beam at UE and receive beam at gNB (or TRP) in uplink. It is noted that a connection between the gNB and UE may be sensitive to any kind of blockages due to the use of narrow beams and poor penetration capability of a signal at high carrier frequencies.

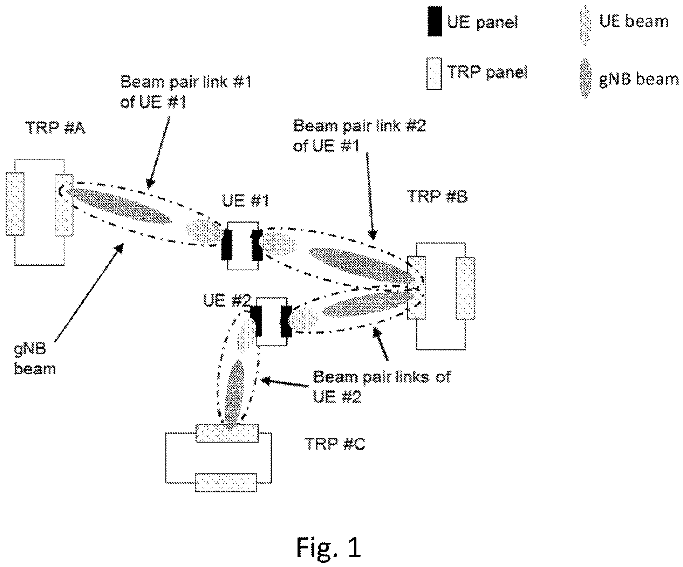

UEs are expected to be equipped with multiple Tx/Rx antenna panels to provide spherical coverage. The number of simultaneously active panels at a time may be different among the UEs and may depend on UE capability but also on power saving strategies that the UEs are using. A gNB may also have a limitation on the number of simultaneous beams. A gNB may perform beam sweep over time and, hence, support more beams than it can support simultaneously. Fig. 1 illustrates an example of a cell with three TRPs (TRP A, TRP B, TRP C) and two UEs (UE1, UE2) with multiple beam pair links between the gNB and UE.

3GPP technical specification (TS) 38.300, section 10.3, discusses the NR Release-15 solution for UL scheduling. This section states that, in the uplink, the gNB can dynamically allocate resources to UEs via the Cell Radio Network Temporary Identifier (C-RNTI) on physical downlink control channel(s) (PDCCH(s)). A UE monitors the PDCCH(s) in order to find possible grants for uplink transmission when its downlink reception is enabled (activity governed by discontinuous reception when configured). In addition, with configured grants, the gNB can allocate uplink resources for the initial hybrid automatic repeat request (HARQ) transmissions to UEs. Two types (Type 1 and Type 2) of configured uplink grants are defined. With Type 1, RRC directly provides the configured uplink grant (including the periodicity). With Type 2, RRC defines the periodicity of the configured uplink grant while PDCCH addressed to configured scheduling radio network temporary identifier (CS-RNTI) can either signal and activate the configured uplink grant, or deactivate it; in other words, a PDCCH addressed to CS-RNTI uplink grant can be implicitly reused according to the periodicity defined by RRC, until deactivated.

When a configured uplink grant is active, if the UE cannot find its C-RNTI/CS-RNTI on the PDCCH(s), an uplink transmission according to the configured uplink grant can be made. Otherwise, if the UE finds its C-RNTI/CS-RNTI on the PDCCH(s), the PDCCH allocation overrides the configured uplink grant. Retransmissions other than repetitions are explicitly allocated via PDCCH(s).

A somewhat similar mechanism is also supported in LTE, where Release-15 WI "Enhancements to LTE operation in unlicensed spectrum" introduced support for autonomous UL transmissions on unlicensed spectrum (SCells in Licensed Assisted Access). With autonomous UL access (AUL), a UE can be RRC configured with a set of subframes and HARQ processes that it may use for autonomous physical uplink shared channel (PUSCH) transmissions. AUL operation is activated and released with downlink control information (DCI) format 0A or 4A. A UE skips an AUL allocation if there is no data in UL buffers. Physical resource block (PRB) allocation, modulation and coding scheme (MCS), as well as demodulation reference signal (DMRS) cyclic shift and orthogonal cover code are indicated to the UE with AUL activation DCI. The UE indicates to the eNB along with each UL transmission the selected HARQ-process ID, new data indicator, redundancy version, UE ID, PUSCH starting and ending points, as well as whether the UE-acquired channel occupancy time (COT) can be shared with the eNB. The eNB may provide to the UE HARQ feedback for AUL-enabled HARQ processes, transmit power command, and transmit precoding matrix indicator (PMI).

AUL also allows for configuring a set of starting positions for UEs with a very fine raster within the first single carrier frequency division multiple access (SC-FDMA) symbol of a subframe: 16, 25, 34, 43, 52, or 61 microseconds after the subframe boundary, or at the beginning of symbol #1. Since the UEs perform listen-before-talk operation prior to the AUL transmission to determine whether the channel is free, a different starting point may allow for, e.g., prioritizing transmissions for certain UEs (by assigning an earlier starting point) and reducing the number of collisions. It is noted that MulteFire 1.1 also supports grant-free UL (GUL), which solution may be rather similar to the AUL described above.

Two transmission schemes are supported for PUSCH in Release-15 NR that support explicit TX beam indication: codebook based transmission and non-codebook based transmission. The UE is configured with codebook based transmission when the higher layer parameter txConfig in PUSCH-Config is set to 'codebook', and the UE is configured non-codebook based transmission when the higher layer parameter txConfig is set to 'nonCodebook'. If the higher layer parameter txConfig is not configured, the UE is not expected to be scheduled by DCI format 0_1. If PUSCH is scheduled by DCI format 0_0, the PUSCH transmission is based on a single antenna port and TX beam is the same as for the PUCCH resource with the lowest ID within the active UL BWP of the cell.

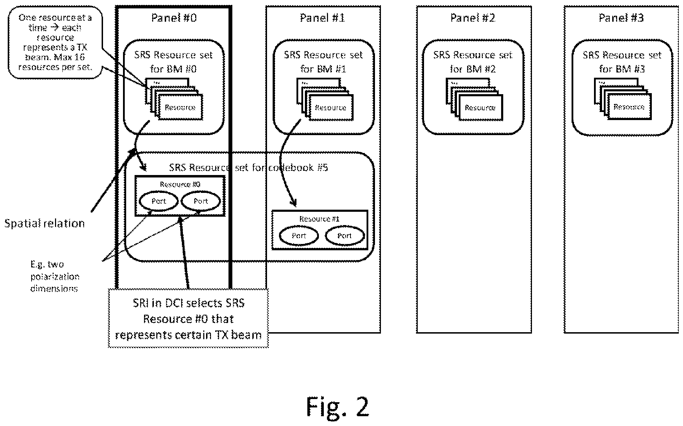

The UE can be scheduled codebook based PUSCH transmission by using DCI format 0_0, DCI format 0_1 or semi-statically configured to operate (configured grant). For the codebook based transmission, the UE determines its PUSCH transmission precoder based on sounding reference signal (SRS) resource indicator (SRI), Transmitted Precoding Matrix Indicator (TPMI) and the transmission rank from the DCI, given by DCI fields of SRS resource indicator (SRI) and precoding information and number of layers. For codebook based transmission, the UE may be configured with a single SRS-ResourceSet set to 'codebook' and only one SRS resource can be indicated based on the SRI from within the SRS resource set. The maximum number of configured SRS resources for codebook based transmission is 2. Each resource can be referred to a TX beam realization, i.e., gNB may select one of the two candidate TX beams for the PUSCH transmission. Fig. 2 illustrates an example of the TX beam selection in codebook based transmission.

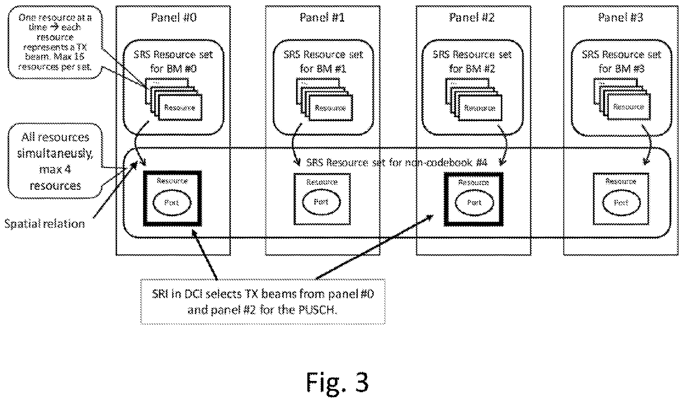

For non-codebook based transmission, PUSCH can be scheduled, e.g., by DCI format 0_0, DCI format 0_1 or semi-statically configured to operate (configured grant). The UE can determine its PUSCH precoder and transmission rank based on the wideband SRI when multiple SRS resources are configured, where the SRI is given by the SRS resource indicator in DCI or the SRI is given by *srs-Resourcelndicator* (semi-static allocation). The UE may use one or multiple SRS resources (i.e., TX beam(s)) for SRS transmission, where the number of SRS resources that can be configured to the UE for simultaneous transmission in the same RBs is a UE capability. One SRS port for each SRS resource is configured, and one SRS resource set can be configured with higher layer parameter usage in SRS-ResourceSet set to 'nonCodebook'. The maximum number of SRS resources that can be configured for non-codebook based uplink transmission is 4. In other words, the PUSCH scheduling command has SRI field that indicates that the UE should transmit PUSCH using one or simultaneous multiple TX beams that are the same TX beam(s) as used for the SRS resources the SRI is pointing to. Fig. 3 illustrates an example of TX beam selection in non-codebook based transmission.

As a part of NR multiple-input multiple-output (MIMO) enhancements, improvements to multi-beam operation are being studied. Some of the objectives of the enhancements to multi-beam operation may include enhancements on multi-TRP/panel transmission including improved reliability and robustness with both ideal and non-ideal backhaul, including Multi-TRP techniques for URLLC requirements may be included as part of the NR MIMO enhancements. Another objective may include enhancements on multi-beam operation, primarily targeting FR2 operation, such as specifying enhancement(s) on UL and/or DL transmit beam selection specified in Release-15 to reduce latency and overhead, specifying UL transmit beam selection for multi-panel operation that facilitates panel-specific beam selection, specifying a beam failure recovery for SCell based on the beam failure recovery specified in Release-15, and specifying measurement and reporting of either L1-RSRQ or L1-SINR.

As outlined above, one important topic within NR MIMO is to enhance beam based operation for URLLC services. Example embodiments may be suitable for NR MIMO, and may also be applicable for both licensed and unlicensed bands.

At higher frequencies, network operation is essentially based on beam-based access. This requires efficient beam management ensuring connectivity between a gNB and a UE by maintaining appropriate beam pair links. Configured grant (CG) PUSCH can be used to provide fast UL transmission for low latency services. CG PUSCH provides benefits also for eMBB especially on unlicensed bands where contention based unpredictable channel access can increase latencies for gNB scheduled UL. So, a UE may be configured with CG PUSCH resources and, when it receives data to UL buffer, it will use the next CG PUSCH resource to send buffer status and UL data.

When CG PUSCH is applied on beam-based access on higher frequencies, certain problems or issues may arise. For example, it may be desirable that a UE with CG PUSCH resource(s) can be as inactive as possible when it does not have data to transmit. This would save UE battery and network from overhead. In addition, CG PUSCH provides low latency only if the UE has beam pair links already "in shape" when data arrives to buffer - also when the UE has been inactive for a while. During the inactivity, the UE may move or be blocked by movement of other items causing change in the suitable beam pair links, especially in the case of multi-TRP deployment of a cell. However, active maintenance of beam pair links requires periodic measurements and reporting, creating unnecessary overhead. Therefore, certain embodiments may address the problem of how to maintain beam pair links for a UE with CG PUSCH resources(s) during inactivity period with low radio resource overhead.

As discussed above, in Release-15 NR, a UE is either configured or signaled the UL beam that it uses for CG PUSCH transmission. The UE cannot autonomously select the beam pair link that it uses for CG PUSCH, making the CG PUSCH vulnerable to beam blockage and reducing significantly the CG PUSCH reliability at higher frequencies. To reduce latency in determining new beam pair link for CG PUSCH, the gNB may use Type 2 CG PUSCH and change the beam pair link by signalling new UL grant to UE.

However, during the UE's inactivity, the beam pair link may become blocked or outdated. With Release-15 NR, this problem could be solved by sufficient frequent beam-pair link measurements and reporting and, when needed, re-determining and signalling the CG PUSCH parameters to the UE. This will increase overhead and increase UE power consumption.

Another option is that the UE may be configured with multiple beam pair links and the UE selects the most suitable beam pair link for CG PUSCH transmission. The drawback of this approach is that CG PUSCH resources are configured in multiple gNB Rx beams for a single UE. When the UE actively communicates with the gNB, the gNB knows which beam pair link the UE would use also for CG PUSCH transmission. The gNB can use the CG PUSCH resources on the other gNB Rx beams, e.g., for scheduling PUSCH transmissions from other UEs. However, when the UE is inactive, the gNB is uncertain which beam pair link the UE would select for CG PUSCH transmission. Correspondingly, the gNB would keep the CG PUSCH resources reserved for single UE in all beam pair links (and corresponding gNB Rx beams) configured for the UE. This will dramatically increase the overhead caused by single CG PUSCH configuration.

Based on the above, there is currently no solution for how to maintain beam pair links for CG PUSCH during UE's inactivity while having acceptable radio resource overhead in beam-based operation and multi-TRP cell deployment.

A UE is configured with multiple uplink resources, such as CG PUSCH resources. The configuration also configures a set of transmission beams and the UE autonomously selects a transmission beam from the configured set of beams for uplink data transmission, such as a CG PUSCH transmission, as will be discussed in more detail below. The metric used in the beam selection may be, for example, L1-reference signal received power (RSRP) or any other measurement reflecting the link quality between a gNB Tx beam and UE Rx beam. The measurement may be done, for example, from DL RS. The beam selection measurement at the UE may be done from pre-defined RS(s), e.g., from primary synchronization signal (PSS) and/or secondary synchronization signal (SSS) and/or DMRS of physical broadcast channel (PBCH) of the SS block and/or from CSI-RS. The measurement window may cover one or multiple transmissions of the pre-defined RS. Multiple DL RS resources (e.g., antenna ports) corresponding to different gNB Tx beams may be configured to the UE and used in measurements. The Tx and Rx beam correspondence is assumed at the UE, which means that the UL Tx beam can be determined from the DL Rx beam corresponding to a certain DL RS resource. It is noted that a beam may be characterized by a resource in general, and a resource may include one or more antenna ports. Each of the antenna ports may transmit a signal that characterizes the beam of the resource.

Embodiments provide a low overhead mechanism for a UE to autonomously select and indicate the UL Tx beam and preferred gNB UL Rx beam for CG PUSCH beforehand. In one embodiment, each configured CG PUSCH resource may correspond to different gNB Rx beam reception time. According to an embodiment, each beam pair link may correspond to different gNB Rx beam reception time and CG PUSCH resource. In another embodiment, single gNB Rx beam reception time may be associated to multiple beam pair links (in case of gNB having multiple antenna panels supporting simultaneous reception).

According to certain embodiments, at least one DL RS resource (antenna port(s) of a resource) may be associated to each CG PUSCH resource; hence, selection of DL RS resource also determines the selected CG PUSCH resource (as well as associated gNB Rx beam reception time). DL RS resource (may have one or multiple antenna ports) corresponds to a DL beam on which gNB transmits. There is Tx and Rx beam correspondence also on the gNB side, meaning that gNB may use the same beam for DL Tx and UL Rx. On a CG PUSCH resource, the UE may transmit towards any of gNB Rx beams (corresponding to the gNB DL Tx beams that are used for transmitting on the DL RS resource) that the gNB can simultaneously receive. However, different CG PUSCH resource (different at least in time) are associated to gNB Rx beams (DL RS resources) that the gNB cannot receive simultaneously.

The UE is configured with multiple periodic or semi-persistent SRS resources. The SRS resources are used by the UE to indicate a particular beam the UE intends to use for uplink data transmission, such as a CG PUSCH transmission. For example, if the UE wishes to indicate a particular beam that it intends to use for CG PUSCH transmission, the UE may transmit SRS on the intended beam and using the corresponding SRS resource.

In an embodiment, each SRS resource may be associated with a different CG PUSCH resource (and gNB Rx beam reception time and at least one associated DL RS resource). According to certain embodiments, the UE may select periodically a transmission beam (and corresponding DL RS resource & CG PUSCH resource) that it intends to use in the potential CG PUSCH transmission. In an embodiment, based on the selected DL RS resource and CG PUSCH resource, the UE may select the SRS resource and transmit SRS using the determined UL Tx beam that it intends to use for CG PUSCH. Hence, SRS is for gNB a periodic indicator about the CG PUSCH resource and UE Tx beam that UE intends to use for possible CG PUSCH transmission. According to some embodiments, the UE transmits SRS only on the selected SRS resource, not on the other SRS resources configured for this purpose. In one example, SRS may be transmitted periodically. In certain embodiments, the UE may change the intended CG PUSCH Tx beam & CG PUSCH resource (if change is needed) only at the time of SRS transmission.

It should be noted that, in addition to CG PUSCH, certain embodiments may also be used to update beam pair links for periodic PUCCH (P-CSI or SR). As introduced above, URLLC may use CG PUSCH resources for low latency. Another URLLC approach is to rely on high periodicity SR resource and scheduled PUSCH. Hence, "working" beam pair link and example embodiments are also applicable for SR, in addition to CG PUSCH.

According to certain embodiments, SRS may be transmitted when the selected CG PUSCH resource or UE Tx beam changes. In this case, SRS may be transmitted multiple times to reach sufficient reliability. In an embodiment, a gNB may also send a DL signal (such as pre-defined PDCCH with special meaning) as acknowledgement for the received SRS. In these cases, the UE may change the beam pair link for GC PUSCH after successful reception of the corresponding DL signal. According to one embodiment, to receive a DL signal, the UE may assume certain pre-defined TX beam used for the PDCCH (e.g., DL TX beam corresponding to current beam pair link or transmit beam configured for the CORESET activating the CG PUSCH). Alternatively, in another embodiment, the UE may assume the TX beam for the DL signal associated to beam pair link of the transmitted SRS. Further, in other example embodiments, instead of SRS, it may be possible to also use contention free PRACH preamble or scheduling request, or some other PUCCH format on predefined resource for this purpose.

In an embodiment, the discussed SRS resources may be used specifically for CG PUSCH beam indication. That may be implemented, for example, by defining a corresponding SRS resource set to which the resources belong to. The UE may also have separate SRS resources (within corresponding resource sets) configured for other purposes (e.g., for channel sounding for scheduled PUSCHs). According to some embodiments, the UE may use the same MCS, PRB allocation, etc. for all configured beam pair links. This is a reasonable approach especially in the case of Type 1 CG PUSCH as Type 1 CG PUSCH typically uses conservative MCS.

In the case of NR CG PUSCH, a single beam pair link is configured for CG PUSCH. Beam management is actively used with corresponding periodic measurements, reporting and CG PUSCH reconfigurations.

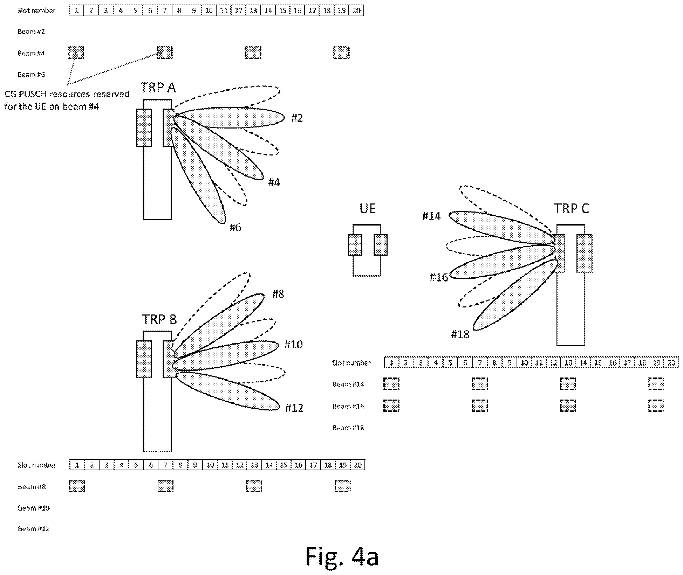

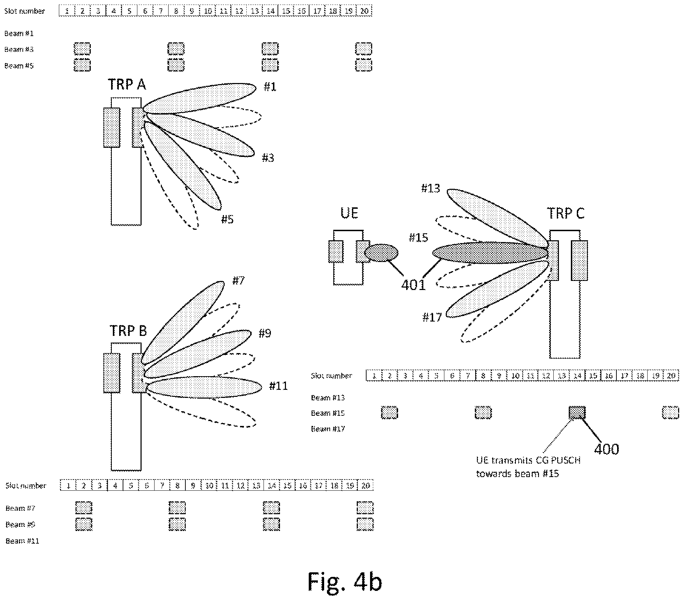

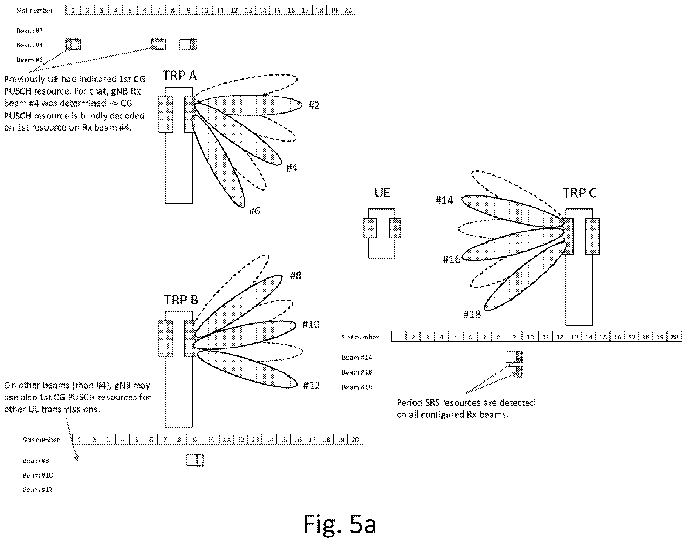

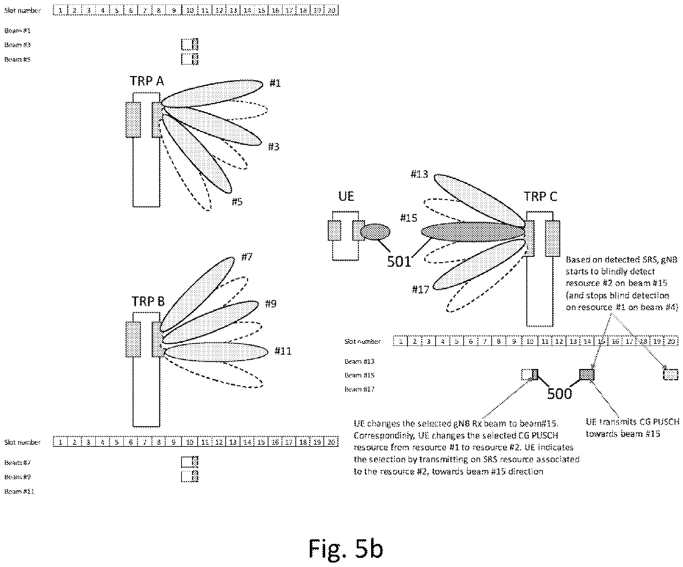

Figs. 4 and 5 illustrate examples of the operation of baseline UE autonomous beam pair link selection for CG-PUSCH, according to some embodiments. In the examples of Figs. 4 and 5, it is assumed that a cell comprises 3 TRPs and 18 beams. In these examples, each TRP may support 6 beams, from which 3 beams can be supported simultaneously. From CG-PUSCH operation viewpoint, beams are organized into 2 beam sets (in the example illustration, to even beams and odd beams). In an example, the beam sets may be used at different time instances and, hence, the CG-PUSCH operation for even and odd beams are shown in Figs. 4a and 4b (and in Figs. 5a and 5b), respectively. For autonomous UE beam selection, gNB beams #3, #4, #5, #7, #8, #9, #14, #15, #16 may be identified as potential gNB Rx beams. DL RS resources corresponding to these gNB beams are configured to the UE for beam measurements.

Figs. 4a and 4b illustrate an example of the baseline UE autonomous beam pair link selection for CG-PUSCH, according to certain embodiments. In the example of Fig. 4a, the gNB may configure periodic CG PUSCH resource #1 with association to DL RS resources corresponding to even gNB beams #4, #8, #14, #16. In the example of Fig. 4b, the gNB may configure periodic CG PUSCH resource #2 with association to DL RS resources corresponding to odd gNB beams #3, #5, #7, #9, #15. In the examples of Figs. 4a and 4b, time in terms of slots is presented for each beam next to each TRP. In the time representations, each blind decoding per beam is shown as one box.

In an embodiment, as the gNB does not know when a UE transmits CG-PUSCH, the gNB may blindly decode each CG PUSCH resource #1 and #2 on each configured candidate gNB beam. Further, the gNB cannot schedule any other UL Tx overlapping with the resources #1 or #2 in any of the candidate gNB beam (excluding overlapping CG PUSCH configuration for another UE - overbooking of CG PUSCH resources is possible, with trade-off between overhead and Tx collisions). As illustrated in the example of Fig. 4b, on slot 14, the UE may transmit CG PUSCH with UE beam directed towards gNB Rx beam #15 as shown with box 400 and beams 401.

According to some embodiments, to facilitate low latency, the CG-PUSCH resources may be configured with short period. Hence, CG-PUSCH operation can present considerable decoding burden as well as resource overhead, as seen from Figs. 4a and 4b. This can limit the use of (otherwise beneficial) autonomous beam selection for CG-PUSCH.

Figs. 5a and 5b illustrate examples of UE autonomous CG-PUSCH beam pair link selection, according to certain embodiments. In the example of Fig. 5, before the shown time window, the UE has indicated that it intends to transmit (in case of UL data for CG PUSCH) on CG PUSCH resource #1 towards the direction of gNB Rx beam #4. Correspondingly, the gNB blindly detects CG PUSCH on resource #1 via gNB Rx beam #4 (shown via the box on slots #1 and #7 in Fig. 5a). The gNB schedules other Tx transmissions overlapping the CG PUSCH resource #2 (configured to the UE), and the gNB may also schedule other Tx transmissions overlapping the CG PUSCH resource #1 for other gNB Rx beams than gNB Rx beam #4 (that have sufficient spatial isolation with gNB Rx beam #4, such as gNB Rx beam #8).

According to an embodiment, in slots #9 and #10, the gNB may monitor the configured SRS resources on all configured candidate Rx beams (#3, #4, #5, #7, #8, #9, #14, #15, #16) as shown in the example of Figs. 5a and 5b. In this example, before slot #9, the UE has determined (based on the measurements of configured DL RS resources) CG-PUSCH resource #2 and Tx beam towards gNB Rx beam #15 as the selected CG-PUSCH resource and Tx beam for a potential CG-PUSCH transmission. The UE may indicate the selection by transmitting SRS in the slot #10 SRS resource towards gNB beam #15. Based on SRS detection, the gNB may start to blindly detect CG PUSCH on resource #2 via gNB Rx beam #15 (shown in Fig 5b) and may stop blind CG PUSCH detection on resource #1 via gNB Rx beam #4. On slot 14, the UE may transmit CG PUSCH with UE beam directed towards gNB Rx beam #15 as shown with box 501 and beams 501 in Fig. 5b.

It is noted that the prior indication of CG PUSCH resource and UE Tx beam and prior determination of the preferred gNB Rx beam may significantly reduce the amount of blind decoding needed as well as resources (including spatial/beam domain resources) reserved for CG PUSCH operation with UE autonomous beam selection. The periodicity for SRS resource can be significantly longer than for the CG PUSCH resource. Additionally, SRS resource reserves only a fraction of REs of a CG PUSCH resource. These also facilitate in the efficient resource use. As a result, example embodiments enable resource efficient operation for UE autonomous beam selection for CG-PUSCH.

According to certain example embodiments, blind detection may refer to signal detection on a determined UL resource without prior knowledge of the UL signal presence on the determined UL resource. For example, a gNB may always try detect the predefined UL channel (e.g., PUSCH) on the predefined UL resource, and determine, e.g., based on the cyclic redundancy check (CRC) whether the UL channel (e.g., PUSCH) was transmitted or not. Another option is that the gNB performs signal (e.g., based on DMRS) and/or power detection (e.g., based on PUSCH DMRS and data) on the predefined UL resource, and if the signal is found, the gNB detects the UL channel (e.g., PUSCH) on the predefined UL resource.

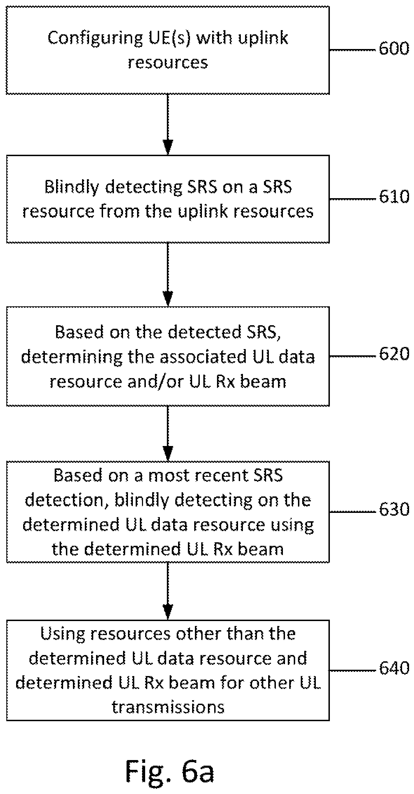

Fig. 6a illustrates an example flow diagram of a method for selecting a suitable beam pair link for CG-PUSCH transmission from multiple configured beam pair links, according to one example embodiment. As will be discussed in connection with the example of Fig. 6a, an embodiment allows for the use of periodic SRS resources for a UE to indicate an intended switch of a PUSCH transmission beam. In certain example embodiments, the flow diagram of Fig. 6a may be performed by a network entity or network node in a 3GPP system, such as LTE or 5G NR. For instance, in some example embodiments, the method of Fig. 6a may be performed by a base station, eNB, or gNB.

According to one embodiment, the method of Fig. 6a may include initially, at 600, configuring one or more UE(s) with a plurality of uplink resources. In an embodiment, the plurality of uplink resources may include multiple CG PUSCH resources. In that case, in one example, the configuring 600 may include configuring the UE(s) with multiple CG PUSCH resources, for instance, via any means of beam measurements and reporting procedures between the UE and gNB. In one example, the configuring 600 may include configuring the UE with a configuration containing multiple UL Tx (i.e., DL Rx) beams, at least one DL RS resource associated with each CG PUSCH resource, and/or one periodic SRS resource associated with each CG PUSCH resource. As just one example, two CG PUSCH resource may be configured with each corresponding to a different gNB Rx beam reception time. In an embodiment, multiple DL Rx beams and DL RS antenna ports may be paired as beam pair links. As an example, the beam pair links available for CG PUSCH transmission may be divided into 2 groups, such as a group of odd beams and a group of even beams, to cope with the gNB limitation on the simultaneous beam operation; each group may correspond to a particular CG PUSCH resource and particular periodic time slots (i.e., each beam defines CG PUSCH resource and CG PUSCH time slots associated with it). In an embodiment, different DL RS resources may be transmitted by the gNB on different transmission beams.

In an embodiment, the method of Fig. 6a may further include, at 610, blindly detecting SRS on a SRS resource of the plurality of uplink resources (e.g., CG PUSCH resources). According to one example, the blindly detecting 610 may include blindly detecting each SRS resource in UL Rx beams corresponding to the DL RS resource associated with the SRS resource. The method may then include, at 620, based on the detected SRS, determining the associated UL data resource (e.g., CG PUSCH resource) and/or an UL Rx beam for the subsequent UL data resource detection (in step 630). According to certain embodiments, the determined UL Rx beam may include the best or most suitable UL Rx beam that provides the highest signal strength, signal-to-noise ratio or signal-to-noise-and-interference ratio. In an embodiment, the determining 620 may include the selecting of a suitable beam based, for example, on selecting a beam providing a signal strength, signal-to-noise ratio or signal-to-noise-and-interference ratio exceeding a threshold. According to some embodiments, the threshold may depend, for example, on the configured MCS, targeted block error rate (BER) or link quality, expected traffic load on the beam, etc.

Based on the most recent SRS detection, the method may also include, at 630, blindly detecting on the determined UL data resource (e.g., CG PUSCH resource associated to the SRS resource), using the determined UL Rx beam. At 640, the method may include using resources other than the determined UL data resource and determined UL Rx beam for other UL transmissions (e.g., for scheduling and receiving PUSCH).

Thus, according to the example of Fig. 6a, a gNB may monitor SRS resources on each beam based on pre-defined rules (e.g., monitoring given slots for even and odd beams) and, based on the received SRS resource and/or the beam on which it was received, the gNB can determine the beam and CG PUSCH resource to which the UE intends to switch for CG PUSCH transmission. In one example, SRS periodicity may be, e.g., 40 slots, which is much longer than CG PUSCH periodicity and also occupies one symbol of the slot. As a result, the gNB may monitor a portion of the slots, while the remaining portion can be used for other UE(s). Hence, compared to monitoring with 6 slot periodicity on each of unused N-1 beams for the duration of the whole slot, the gNB would only need to monitor with 40 slot periodicity on the same beams and for the duration of just 1 SRS symbol. Since the gNB, based on the received SRS, knows the beam to which the UE intends to switch for CG PUSCH and the corresponding CG PUSCH resource, in the next time slot on that beam for CG PUSCH, the gNB may stop monitoring the old beam and start monitoring the new beam.

It is noted that, in certain examples, monitoring may include blind detection of a predefined signal (such as GC PUSCH or PUCCH) on the determined uplink Rx beam. On the other hand, "monitoring" can be understood more generally as also including other functionalities, such as how to deal with previously used Rx beams, or how to deal with other related UL signals/ UL procedures (e.g., power control, TA update, etc.).

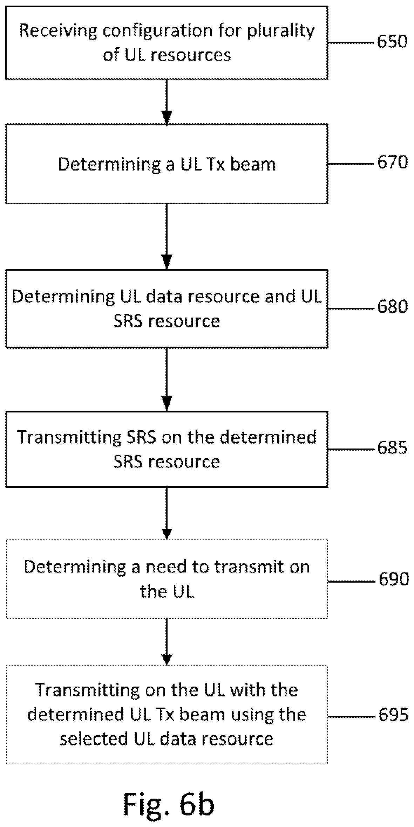

Fig. 6b illustrates an example flow diagram of a method for selecting a suitable beam pair link for CG-PUSCH transmission from multiple configured beam pair links, according to one embodiment. In certain embodiments, the method of Fig. 6b may be performed by a mobile station and/or UE, for instance. According to an embodiment, the method of Fig. 6b may include, at 650, receiving configuration for a plurality of UL resources. In one example embodiment, the receiving 650 may include receiving configuration of multiple CG PUSCH resources, for example, via any means of beam measurements and reporting procedures between the UE and gNB. In one example, the receiving 650 may include receiving a configuration containing multiple UL Tx beams, at least one DL RS antenna port associated with each CG PUSCH resource, and/or one periodic SRS resource associated with each CG PUSCH resource. As noted above, in an embodiment, multiple DL Rx beams and DL RS antenna ports may be paired as beam pair links.

According to certain embodiments, the method of Fig. 6b may also include, at 670, determining an UL Tx beam. In one example, the determining 670 may include selecting a UL Tx beam (corresponding to DL Rx beam) and corresponding DL RS resource based on a selection metric. In an embodiment, the method may further include, at 680, determining an uplink data resource (e.g., CG PUSCH resource) and UL SRS resource, e.g., based on the selected DL RS resource (e.g., antenna port). In one example, the method may also include, at 685, transmitting SRS on the determined SRS resource, for example, to indicate to the network the UL Tx beam and/or the determined UL data resource that the UE intends to use for UL data transmission. According to one example embodiment, the SRS may be transmitted using the determined UL Tx beam. In an example embodiment, the method may include, at 690, determining a need to transmit on the UL and, at 695, transmitting on the UL with the determined UL Tx beam using the selected UL data resource (e.g., CG PUSCH resource).

Thus, in view of the example of Fig. 6b, the UE can perform beam measurements based on DL RS(s) sent by the gNB on different beams and selects the best or a suitable beam. Based on the selected beam, the UE may select the SRS resource (e.g., from among two SRS resources) and transmits the SRS resource on the intended beam in the time slots associated with that beam (e.g., different time slots are associated with odd and even beams similarly as for CG PUSCH resources).

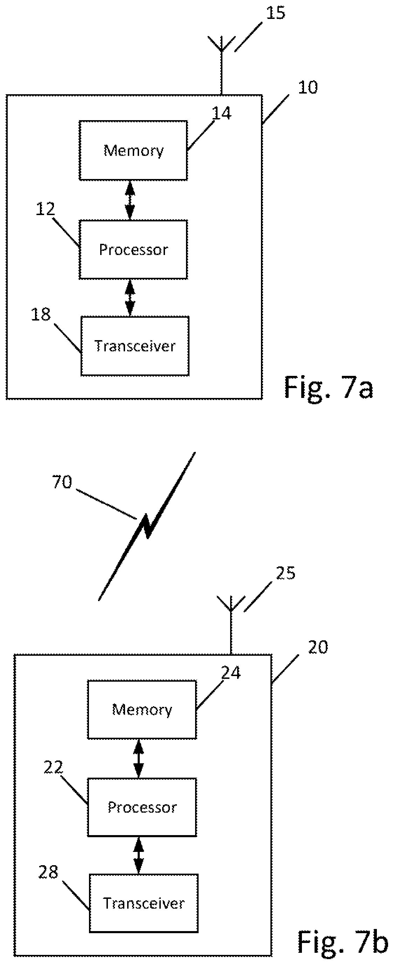

Fig. 7a illustrates an example of an apparatus 10 according to an embodiment. In an embodiment, apparatus 10 may be a node, host, or server in a communications network or serving such a network. For example, apparatus 10 may be a satellite, base station, a Node B, an evolved Node B (eNB), 5G Node B or access point, next generation Node B (NG-NB or gNB), and/or WLAN access point, associated with a radio access network, such as a LTE network, 5G or NR. In example embodiments, apparatus 10 may be an eNB in LTE or gNB in 5G.

It should be understood that, in some embodiments, apparatus 10 may be comprised of an edge cloud server as a distributed computing system where the server and the radio node may be stand-alone apparatuses communicating with each other via a radio path or via a wired connection, or they may be located in a same entity communicating via a wired connection. For instance, in certain example embodiments where apparatus 10 represents a gNB, it may be configured in a central unit (CU) and distributed unit (DU) architecture that divides the gNB functionality. In such an architecture, the CU may be a logical node that includes gNB functions such as transfer of user data, mobility control, radio access network sharing, positioning, and/or session management, etc. The CU may control the operation of DU(s) over a front-haul interface. The DU may be a logical node that includes a subset of the gNB functions, depending on the functional split option. It should be noted that one of ordinary skill in the art would understand that apparatus 10 may include components or features not shown in Fig. 7a.

As illustrated in the example of Fig. 7a, apparatus 10 may include a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 12 is shown in Fig. 7a, multiple processors may be utilized according to other embodiments. For example, it should be understood that, in certain embodiments, apparatus 10 may include two or more processors that may form a multiprocessor system (e.g., in this case processor 12 may represent a multiprocessor) that may support multiprocessing. In certain embodiments, the multiprocessor system may be tightly coupled or loosely coupled (e.g., to form a computer cluster).

Processor 12 may perform functions associated with the operation of apparatus 10, which may include, for example, precoding of antenna gain/phase parameters, encoding and decoding of individual bits forming a communication message, formatting of information, and overall control of the apparatus 10, including processes related to management of communication resources.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10.

In some embodiments, apparatus 10 may also include or be coupled to one or more antennas 15 for transmitting and receiving signals and/or data to and from apparatus 10. Apparatus 10 may further include or be coupled to a transceiver 18 configured to transmit and receive information. The transceiver 18 may include, for example, a plurality of radio interfaces that may be coupled to the antenna(s) 15. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an uplink).

As such, transceiver 18 may be configured to modulate information on to a carrier waveform for transmission by the antenna(s) 15 and demodulate information received via the antenna(s) 15 for further processing by other elements of apparatus 10. In other embodiments, transceiver 18 may be capable of transmitting and receiving signals or data directly. Additionally or alternatively, in some embodiments, apparatus 10 may include an input and/or output device (I/O device).

In an embodiment, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

According to some embodiments, processor 12 and memory 14 may be included in or may form a part of processing circuitry or control circuitry. In addition, in some embodiments, transceiver 18 may be included in or may form a part of transceiving circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to case an apparatus (e.g., apparatus 10) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 10 may be a network node or RAN node, such as a base station, access point, Node B, eNB, gNB, WLAN access point, or the like. According to certain embodiments, apparatus 10 may be controlled by memory 14 and processor 12 to perform the functions associated with any of the embodiments described herein, such as the flow or signaling diagrams illustrated in Figs. 6a or 6b. In some embodiments, apparatus 10 may be configured to perform a procedure for selecting a suitable beam pair link for CG-PUSCH transmission, for example.

For instance, in one embodiment, apparatus 10 may be controlled by memory 14 and processor 12 to configure one or more UE(s) with a plurality of uplink resources. In an embodiment, the plurality of uplink resources may include multiple CG PUSCH resources. For example, in an embodiment, apparatus 10 may be controlled by memory 14 and processor 12 to configure the UE(s) with multiple CG PUSCH resources, for instance, via any means of beam measurements and reporting procedures between the UE and gNB. In one example, apparatus 10 may be controlled by memory 14 and processor 12 to configure the UE with a configuration containing multiple UL Tx (i.e., DL Rx) beams, at least one DL RS resource associated with each CG PUSCH resource, and/or one periodic SRS resource associated with each CG PUSCH resource. In an embodiment, multiple DL Rx beams and DL RS antenna ports may be paired as beam pair links. As an example, the beam pair links available for CG PUSCH transmission may be divided into 2 groups, such as a group of odd beams and a group of even beams; each group may correspond to a particular CG PUSCH resource and particular periodic time slots. In an embodiment, apparatus 10 may be controlled by memory 14 and processor 12 to transmit different DL RS resources on different transmission beams.

In an embodiment, apparatus 10 may be controlled by memory 14 and processor 12 to blindly detect SRS on a SRS resource of the plurality of uplink resources (e.g., CG PUSCH resources). According to one example, apparatus 10 may be controlled by memory 14 and processor 12 to blindly detect each SRS resource in UL Rx beams corresponding to the DL RS resource associated with the SRS resource. According to certain embodiments, based on the detected SRS, apparatus 10 may be controlled by memory 14 and processor 12 to determine the associated UL data resource (e.g., CG PUSCH resource) and/or an UL Rx beam for SRS detection. Based on the most recent SRS detection, apparatus 10 may be controlled by memory 14 and processor 12 to blindly detect on the determined UL data resource (e.g., CG PUSCH resource associated to the SRS resource), using the determined UL Rx beam. In one embodiment, apparatus 10 may be controlled by memory 14 and processor 12 to use resources other than the determined UL data resource and determined UL Rx beam for other UL transmissions (e.g., for scheduling and receiving PUSCH).

Thus, according to certain embodiments, apparatus 10 may be controlled by memory 14 and processor 12 to monitor SRS resources on each beam based on pre-defined rules (e.g., monitoring given slots for even and odd beams) and, based on the received SRS resource and/or the beam on which it was received, apparatus 10 can determine the beam and CG PUSCH resource to which the UE intends to switch for CG PUSCH transmission. As such, apparatus 10 may be controlled by memory 14 and processor 12 to monitor a portion of the slots, while the remaining portion can be used for other UE(s). Since apparatus 10, based on the received SRS, knows the beam to which the UE intends to switch for CG PUSCH and the corresponding CG PUSCH resource, in the next time slot on that beam for CG PUSCH, apparatus 10 may stop monitoring the old beam and start monitoring the new beam.

Fig. 7b illustrates an example of an apparatus 20 according to another embodiment. In an embodiment, apparatus 20 may be a node or element in a communications network or associated with such a network, such as a UE, mobile equipment (ME), mobile station, mobile device, stationary device, IoT device, or other device. As described herein, UE may alternatively be referred to as, for example, a mobile station, mobile equipment, mobile unit, mobile device, user device, subscriber station, wireless terminal, tablet, smart phone, IoT device, sensor or NB-IoT device, or the like. As one example, apparatus 20 may be implemented in, for instance, a wireless handheld device, a wireless plug-in accessory, or the like.

In some embodiments, apparatus 20 may include one or more processors, one or more computer-readable storage medium (for example, memory, storage, or the like), one or more radio access components (for example, a modem, a transceiver, or the like), and/or a user interface. In some embodiments, apparatus 20 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 20 may include components or features not shown in Fig. 7b.

As illustrated in the example of Fig. 7b, apparatus 20 may include or be coupled to a processor 22 for processing information and executing instructions or operations. Processor 22 may be any type of general or specific purpose processor. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in Fig. 7b, multiple processors may be utilized according to other embodiments. For example, it should be understood that, in certain embodiments, apparatus 20 may include two or more processors that may form a multiprocessor system (e.g., in this case processor 22 may represent a multiprocessor) that may support multiprocessing. In certain embodiments, the multiprocessor system may be tightly coupled or loosely coupled (e.g., to form a computer cluster).

Processor 22 may perform functions associated with the operation of apparatus 20 including, as some examples, precoding of antenna gain/phase parameters, encoding and decoding of individual bits forming a communication message, formatting of information, and overall control of the apparatus 20, including processes related to management of communication resources.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In an embodiment, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20.

In some embodiments, apparatus 20 may also include or be coupled to one or more antennas 25 for receiving a downlink signal and for transmitting via an uplink from apparatus 20. Apparatus 20 may further include a transceiver 28 configured to transmit and receive information. The transceiver 28 may also include a radio interface (e.g., a modem) coupled to the antenna 25. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 28 may be configured to modulate information on to a carrier waveform for transmission by the antenna(s) 25 and demodulate information received via the antenna(s) 25 for further processing by other elements of apparatus 20. In other embodiments, transceiver 28 may be capable of transmitting and receiving signals or data directly. Additionally or alternatively, in some embodiments, apparatus 10 may include an input and/or output device (I/O device). In certain embodiments, apparatus 20 may further include a user interface, such as a graphical user interface or touchscreen.

In an embodiment, memory 24 stores software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software. According to an embodiment, apparatus 20 may optionally be configured to communicate with apparatus 10 via a wireless or wired communications link 70 according to any radio access technology, such as NR.

According to some embodiments, processor 22 and memory 24 may be included in or may form a part of processing circuitry or control circuitry. In addition, in some embodiments, transceiver 28 may be included in or may form a part of transceiving circuitry.

As discussed above, according to some embodiments, apparatus 20 may be a UE, mobile device, mobile station, ME, IoT device and/or NB-IoT device, for example. According to certain embodiments, apparatus 20 may be controlled by memory 24 and processor 22 to perform the functions associated with example embodiments described herein. For example, in some embodiments, apparatus 20 may be configured to perform one or more of the processes depicted in any of the flow charts or signaling diagrams described herein, such as the flow diagrams illustrated in Figs. 6a or 6b. For example, in certain embodiments, apparatus 20 may be configured to perform a procedure for selecting a suitable beam pair link for CG-PUSCH transmission, for instance.

According to some embodiments, apparatus 20 may be controlled by memory 24 and processor 22 to receive configuration for a plurality of UL resources. In one example, the plurality of UL resources may include multiple CG PUSCH resources that can be received, for example, via any means of beam measurements and reporting procedures between the apparatus 20 and a network (e.g., gNB). In one example, apparatus 20 may be controlled by memory 24 and processor 22 to receive a configuration containing multiple UL Tx beams, at least one DL RS antenna port associated with each CG PUSCH resource, and/or one periodic SRS resource associated with each CG PUSCH resource. As noted above, in an embodiment, multiple DL Rx beams and DL RS antenna ports may be paired as beam pair links.

According to certain embodiments, apparatus 20 may be controlled by memory 24 and processor 22 to measure DL RS resources with each configured (or paired) DL Rx beam and deriving a corresponding CG PUSCH beam pair link selection metric. In an embodiment, apparatus 20 may be controlled by memory 24 and processor 22 to determine an UL Tx beam. In one example embodiment, apparatus 20 may be controlled by memory 24 and processor 22 to select the UL Tx beam and corresponding DL RS resource based on a selection metric. In one embodiment, apparatus 20 may be controlled by memory 24 and processor 22 to determine an UL data resource (e.g., CG PUSCH resource) and UL SRS resource, e.g., based on the selected DL RS resource (e.g., antenna port). According to some embodiments, apparatus 20 may be controlled by memory 24 and processor 22 to transmit SRS on the determined SRS resource, for example, to indicate to the network the UL Tx beam and/or the determined UL data resource that the apparatus 20 intends to use for UL data transmission. According to one example embodiment, apparatus 20 may be controlled to transmit the SRS using the determined UL Tx beam. In an example embodiment, apparatus 20 may be controlled by memory 24 and processor 22 to determine when there is a need to transmit on the UL, and, if so, to transmit on the UL with the determined UL Tx beam using the selected UL data resource.

Thus, apparatus 20 may be controlled by memory 24 and processor 22 to perform beam measurements based on DL RS(s) sent by the gNB on different beams and to select the beast beam. Based on the selected beam, apparatus 20 may be controlled by memory 24 and processor 22 to select the SRS resource (e.g., from among two SRS resources) and to transmit the SRS resource on the intended beam in the time slots associated with that beam.

Therefore, certain embodiments provide several technical improvements, enhancements, and/or advantages. For example, certain embodiments support beneficial UE autonomous beam pair link (and associated CG PUSCH resource) selection for CG PUSCH. Embodiments provide a low overhead mechanism for a UE to indicate, to a gNB, the CG PUSCH resource and UL Tx beam selected for CG PUSCH. This facilitates gNB Rx beam determination for the potential CG PUSCH transmission, ensuring that beam pair links are "working" or providing connectivity for low latency data carried by CG PUSCH transmission. This further facilitates low latency CG PUSCH and SR with acceptable overhead in beam-based operation.

Furthermore, embodiments improve CG PUSCH efficiency in beam-based operation. In an embodiment, the UE may indicate the CG PUSCH resource that it intends to use in case of CG PUSCH transmission. If, for example, the UE has PUSCH resources reserved on N gNB Rx beams, as a result of embodiments, the gNB can dynamically allocate the configured resources for other UEs in N-1 beams, reducing the overhead for CG PUSCH.

In addition, certain embodiments may also reduce the gNB blind detection burden. Normally, the gNB would just monitor all configured CG PUSCH resources. However, according to embodiments, blind detection of all configured resources is limited to SRS, and the gNB would blindly decode only the indicated CG PUSCH resource. Also, certain embodiments effectively reduce the need for relatively heavy beam recovery procedure which is the only way to recover the link in the baseline scheme when the configured/signaled beam pair link gets blocked.

Accordingly, the use of certain example embodiments results in improved functioning of communications networks and their nodes.

In some example embodiments, the functionality of any of the methods, processes, signaling diagrams, algorithms or flow charts described herein may be implemented by software and/or computer program code or portions of code stored in memory or other computer readable or tangible media, and executed by a processor.

In some example embodiments, an apparatus may be included or be associated with at least one software application, module, unit or entity configured as arithmetic operation(s), or as a program or portions of it (including an added or updated software routine), executed by at least one operation processor. Programs, also called program products or computer programs, including software routines, applets and macros, may be stored in any apparatus-readable data storage medium and include program instructions to perform particular tasks.

A computer program product may comprise one or more computer-executable components which, when the program is run, are configured to carry out some embodiments. The one or more computer-executable components may be at least one software code or portions of it. Modifications and configurations required for implementing functionality of an embodiment may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other embodiments, the functionality may be performed by hardware or circuitry included in an apparatus (e.g., apparatus 10 or apparatus 20), for example through the use of an application specific integrated circuit (ASIC), a programmable gate array (PGA), a field programmable gate array (FPGA), or any other combination of hardware and software. In yet another embodiment, the functionality may be implemented as a signal, a non-tangible means that can be carried by an electromagnetic signal downloaded from the Internet or other network.

According to an embodiment, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

Example 1, which is not encompassed by the wording of the claims but is considered to be useful for understanding the invention, is directed to a method that may include receiving, by a user equipment from a network node, a configuration for a plurality of uplink resources. The method may also include determining an uplink transmit (Tx) beam. The method may further include determining an uplink data resource and an uplink sounding reference signal (SRS) resource and transmitting sounding reference signal on the determined uplink sounding reference signal (SRS) resource to indicate, to the network node, the uplink Tx beam and/or the determined uplink data resource that the user equipment intends to use for uplink data transmission. The sounding reference signal may be transmitted using the determined uplink Tx beam.

Example 2, which is not encompassed by the wording of the claims but are considered to be useful for understanding the invention, is directed to an apparatus comprising means for performing the method of Example 1, such as an apparatus including at least one processor and at least one memory comprising computer program code. The at least one memory and computer program code may be configured, with the at least one processor, to cause the apparatus at least to receive, from a network node, a configuration for a plurality of uplink resources. The at least one memory and computer program code may also be configured, with the at least one processor, to cause the apparatus at least to determine an uplink transmit (Tx) beam. The at least one memory and computer program code may be further configured, with the at least one processor, to cause the apparatus at least to determine an uplink data resource and an uplink sounding reference signal (SRS) resource and transmit sounding reference signal on the determined uplink sounding reference signal (SRS) resource to indicate, to the network node, the uplink Tx beam and/or the determined uplink data resource that the apparatus intends to use for uplink data transmission. The sounding reference signal may be transmitted using the determined uplink Tx beam.

In a variant, the plurality of uplink resources comprises uplink data resources and uplink sounding reference signal resources.

In a variant, at least one downlink reference signal resource is associated with each of the uplink data resources and/or uplink sounding reference signal resources.

In a variant, the method may further include (or the at least one memory and computer program code may be configured, with the at least one processor, to cause the apparatus at least to) selecting a downlink reference signal resource.

In a variant, the determining of the uplink transmit (Tx) beam may be performed based on the selected downlink reference signal resource.

In a variant, the determining of an uplink data resource and/or an uplink sounding reference signal resource may be based on the selected downlink reference signal resource.

In a variant, the method may also include (or the at least one memory and computer program code may be configured, with the at least one processor, to cause the apparatus at least to) determining a need to transmit on the uplink, and transmitting on the uplink with the determined uplink Tx beam using the selected uplink data resource.

In a variant, the uplink data resources may include at least one of configured grant physical uplink shared channel (CG PUSCH) resources or physical uplink control channel (PUCCH) resources.

In a variant, the uplink data transmission may include at least one of configured grant physical uplink shared channel (CG PUSCH) transmission or physical uplink control channel (PUCCH) transmission.

In a variant, the receiving of the configuration may include receiving a configuration containing multiple uplink Tx beams, the at least one downlink reference signal resource associated with each of the uplink resources, and/or at least one periodic sounding reference signal (SRS) resource associated with each uplink resource.

In a variant, the method may further include (or the at least one memory and computer program code may be configured, with the at least one processor, to cause the apparatus at least to) receiving at least one downlink reference signal from at least one downlink reference signal antenna port on the at least one downlink reference signal resource.

In a variant, the determining of the uplink Tx beam may include, selecting an uplink Tx beam and corresponding downlink reference signal resource based on a selection metric.

Example 3, which is not encompassed by the wording of the claims but is considered to be useful for understanding the invention, is directed to a method, which may include configuring, by a network node, at least one user equipment with a plurality of uplink resources. The method may also include blindly detecting sounding reference signal (SRS) on a sounding reference signal resource of the plurality of uplink resources. The method may also include determining based on the detected sounding reference signal, an associated uplink data resource and/or an uplink receive (Rx) beam.

Example 4, which is not encompassed by the wording of the claims but are considered to be useful for understanding the invention, is directed to an apparatus comprising means for performing the method of Example 3, such as an apparatus including at least one processor and at least one memory comprising computer program code. The at least one memory and computer program code may be configured, with the at least one processor, to cause the apparatus at least to configure at least one user equipment with a plurality of uplink resources. The at least one memory and computer program code may be further configured, with the at least one processor, to cause the apparatus at least to blindly detect sounding reference signal (SRS) on a sounding reference signal resource of the plurality of uplink resources. The at least one memory and computer program code may be configured, with the at least one processor, to cause the apparatus at least to determine based on the detected sounding reference signal, an associated uplink data resource and/or an uplink receive (Rx) beam..

In a variant, method may further include (or the at least one memory and computer program code may be configured, with the at least one processor, to cause the apparatus at least to), based on a most recent sounding reference signal (SRS) detection, blindly detecting on the determined uplink data resource by using the determined uplink receive (Rx) beam.

In a variant, the plurality of uplink resources comprises uplink data resources and uplink sounding reference signal resources. The determined uplink data resource is an uplink data resource from the plurality of uplink data resources.

In a variant, at least one downlink reference signal resource is associated with each of the uplink data resources and/or uplink sounding reference signal resources.

In a variant, the blindly detecting comprises blindly detecting each sounding reference signal (SRS) resource in uplink receive (Rx) beams corresponding to the at least one downlink reference signal resource associated to the sounding reference signal resource.

In a variant, the uplink data resources may include at least one of configured grant physical uplink shared channel (CG PUSCH) resources or physical uplink control channel (PUCCH) resources.

In a variant, the configuring may include configuring the at least one user equipment with a configuration containing multiple uplink Tx beams, the at least one downlink reference signal resource associated with each of the uplink data resources, and/or at least one periodic sounding reference signal (SRS) resource associated with each uplink data resource.

In a variant, the uplink Rx beam may be a suitable uplink Rx beam that provides the highest signal strength, signal-to-noise ratio or signal-to-noise-and-interference ratio. For example, in one variant, the determining of a suitable uplink Rx beam may include selecting a beam providing a signal strength, signal-to-noise ratio or signal-to-noise-and-interference ratio exceeding a threshold.

In a variant, the method may further include (or the at least one memory and computer program code may be configured, with the at least one processor, to cause the apparatus at least to) stopping monitoring or blindly detecting of the beam previously used for monitoring or blindly detecting the at least one user equipment.

In a variant, the method may further include (or the at least one memory and computer program code may be configured, with the at least one processor, to cause the apparatus at least to) using the uplink data resources other than the determined uplink data resource and the determined uplink Rx beam for other uplink transmissions.

In a variant, the method may further include (or the at least one memory and computer program code may be configured, with the at least one processor, to cause the apparatus at least to) transmitting at least one downlink reference signal from at least one downlink reference signal antenna port on the at least one downlink reference signal resource.

One having ordinary skill in the art will readily understand that the example embodiments as discussed above may be practiced with steps in a different order, and/or with hardware elements in configurations which are different than those which are disclosed. Therefore, although some embodiments have been described based upon these example preferred embodiments, it would be apparent to those of skill in the art that certain modifications, variations, and alternative constructions would be apparent. The intended limitations are defined by the appended claims.

## Claims

1. An apparatus comprising:
means for receiving (650), from a network node, a configuration for a plurality of uplink resources and a set of uplink transmit, Tx, beams and for multiple periodic or semi-persistent sounding reference signal resources;
means for determining (670) autonomously an uplink transmit, Tx, beam from the set of uplink Tx beams;
means for determining (680) an uplink data resource from the plurality of uplink resources and an uplink sounding reference signal resource; and
means for transmitting (685) a sounding reference signal on the determined uplink sounding reference signal resource of said multiple periodic or semi-persistent sounding reference signal resources to indicate, to the network node, the uplink Tx beam and/or the determined uplink data resource that the apparatus intends to use for uplink data transmission.

2. The apparatus of claim 1, further comprising means for transmitting (685) the sounding reference signal using the determined uplink Tx beam.

3. The apparatus of claim 1 or claim 2, wherein at least one downlink reference signal resource is associated with each of the uplink data resources and/or uplink sounding reference signal resources.

4. The apparatus of claim 1 or claim 2, further comprising means for selecting a downlink reference signal resource.

5. The apparatus of claim 4, further comprising means for determining (670, 680) the at least one of the uplink transmit Tx beam, the uplink data resource, or the uplink sounding reference signal resource based on the selected downlink reference signal resource.

6. The apparatus of claims 1 - 5, wherein the uplink data resource comprises at least one of configured grant physical uplink shared channel, CG PUSCH, resource or physical uplink control channel, PUCCH, resource.

7. The apparatus of claims 1 - 6, wherein the uplink data transmission includes at least one of configured grant physical uplink shared channel, CG PUSCH, transmission or physical uplink control channel, PUCCH, transmission.

8. The apparatus of claims 1 - 7, further comprising means for receiving (650) the configuration by receiving a configuration containing at least one downlink reference signal resource associated with each of the uplink resources, and/or at least one periodic sounding reference signal resource associated with each uplink resource.

9. The apparatus of claims 1 - 8, further comprising means for determining (670) the uplink Tx beam by selecting an uplink Tx beam and corresponding downlink reference signal resource based on a selection metric.

10. An apparatus, comprising:
means for transmitting (600), to at least a user equipment, a configuration for a plurality of uplink resources and a set of uplink transmit, Tx, beams and for multiple periodic or semi-persistent sounding reference signals to enable autonomous selection of a TX beam from the set of uplink Tx beams by the user equipment;
means for blindly detecting (610) a sounding reference signal on a sounding reference signal resource of the plurality of uplink resources; and
means for determining (620) based on the detected sounding reference signal, an associated uplink data resource and/or an uplink receive, Rx, beam.

11. The apparatus of claim 10, wherein the plurality of uplink resources comprises uplink data resources and uplink sounding reference signal resources, and wherein the determined uplink data resource is an uplink data resource from the plurality of uplink data resources.

12. The apparatus of claim 11, wherein at least one downlink reference signal resource is associated with each of the uplink data resources and/or uplink sounding reference signal resources.

13. The apparatus of claim 11 or claim 12, wherein the uplink data resources comprise at least one of configured grant physical uplink shared channel, CG PUSCH, resources or physical uplink control channel, PUCCH, resources.

14. A method comprising:
receiving (650), by a user equipment from a network node, a configuration for a plurality of uplink resources and a set of uplink transmit, Tx, beams and for multiple periodic or semi-persistent sounding reference signal resources;
determining (670) autonomously an uplink transmit, Tx, beam from the set of uplink Tx beams;
determining (680) an uplink data resource from the plurality of uplink resources and an uplink sounding reference signal resource; and
transmitting (685) sounding reference signal on the determined uplink sounding reference signal resource of said multiple periodic or semi-persistent sounding reference signal resources to indicate, to the network node, the uplink Tx beam and/or the determined uplink data resource that the user equipment intends to use for uplink data transmission.

15. A method comprising:
transmitting (600), by a network node, a configuration to at least a user equipment with a plurality of uplink resources and a set of uplink transmit, Tx, beams and for multiple periodic or semi-persistent sounding reference signals to enable autonomous selection of a TX beam from the set of uplink Tx beams by the user equipment;
blindly detecting (610) a sounding reference signal on a sounding reference signal resource of the plurality of uplink resources; and
determining (620) based on the detected sounding reference signal, an associated uplink data resource and/or an uplink receive, Rx, beam.

## Patentansprüche

1. Vorrichtung, die Folgendes umfasst:
Mittel zum Empfangen (650) einer Auslegung für eine Vielzahl von Uplinkressourcen und einen Satz von Uplinksende(Tx)-Strahlen und für mehrere periodische oder semipersistente Sondierungsreferenzsignalressourcen von einem Netzwerkknoten;
Mittel zum autonomen Bestimmen (670) eines Uplinksende(Tx)-Strahls aus dem Satz von Uplink-Tx-Strahlen;
Mittel zum Bestimmen (680) einer Uplinkdatenressource aus der Vielzahl von Uplinkressourcen und einer Uplinksondierungsreferenzsignalressource; und
Mittel zum Übertragen (685) eines Sondierungsreferenzsignals auf der bestimmten Uplinksondierungsreferenzsignalressource der mehreren periodischen oder semipersistenten Sondierungsreferenzsignalressourcen, um dem Netzwerkknoten den Uplink-Tx-Strahl und/oder die bestimmte Uplinkdatenressource anzuzeigen, die die Vorrichtung für eine Uplinkdatenübertragung zu verwenden beabsichtigt.

2. Vorrichtung nach Anspruch 1, die ferner Mittel zum Übertragen (685) des Sondierungsreferenzsignals unter Verwendung des bestimmten Uplink-Tx-Strahls umfasst.

3. Vorrichtung nach Anspruch 1 oder Anspruch 2, wobei mit jeder der Uplinkdatenressourcen und/oder der Uplinksondierungsreferenzsignalressourcen mindestens eine Downlinkreferenzsignalressource verknüpft ist.

4. Vorrichtung nach Anspruch 1 oder Anspruch 2, die ferner Mittel zum Auswählen einer Downlinkreferenzsignalressource umfasst.

5. Vorrichtung nach Anspruch 4, die ferner Mittel zum Bestimmen (670, 680) von mindestens einem des Uplinksende(Tx)-Strahls, der Uplinkdatenressource oder der Uplinksondierungsreferenzsignalressource auf Basis der ausgewählten Downlinkreferenzsignalressource umfasst.

6. Vorrichtung nach den Ansprüchen 1 bis 5, wobei die Uplinkdatenressource mindestens eines von einer gemeinsam verwendeten physischen Configured-Grant-Uplinkkanal(CG PUSCH)-Ressource oder einer physischen Uplinksteuerkanal(PUCCH)-Ressource umfasst.

7. Vorrichtung nach den Ansprüchen 1 bis 6, wobei die Uplinkdatenübertragung mindestens eines von einer gemeinsam verwendeten physischen Configured-Grant-Uplinkkanal(CG PUSCH)-Übertragung oder einer physischen Uplinksteuerkanal(PUCCH)-Übertragung umfasst.

8. Vorrichtung nach den Ansprüchen 1 bis 7, die ferner Mittel zum Empfangen (650) der Auslegung durch Empfangen einer Auslegung umfasst, die mindestens eine Downlinkreferenzsignalressource, die mit jeder der Uplinkressourcen verknüpft ist, und/oder mindestens eine periodische Sondierungsreferenzsignalressource, die mit jeder Uplinkressource verknüpft ist, enthält.

9. Vorrichtung nach den Ansprüchen 1 bis 8, die ferner Mittel zum Bestimmen (670) des Uplink-Tx-Strahls durch Auswählen eines Uplink-Tx-Strahls und einer entsprechenden Downlinkreferenzsignalressource auf Basis einer Auswahlmetrik umfasst.

10. Vorrichtung, die Folgendes umfasst:
Mittel zum Übertragen (600) einer Auslegung zu mindestens einer Teilnehmereinrichtung für eine Vielzahl von Uplinkressourcen und einen Satz von Uplinksende(Tx)-Strahlen und für mehrere periodische oder semipersistente Sondierungsreferenzsignale, um eine autonome Auswahl eines TX-Strahls aus dem Satz von Uplink-Tx-Strahlen durch die Teilnehmereinrichtung zu ermöglichen;
Mittel zum blinden Detektieren (610) eines Sondierungsreferenzsignals auf einer Sondierungsreferenzsignalressource der Vielzahl von Uplinkressourcen; und
Mittel zum Bestimmen (620) einer verknüpften Uplinkdatenressource und/oder eines Uplinkempfangs(Rx)-Strahls auf Basis des detektierten Sondierungsreferenzsignals.

11. Vorrichtung nach Anspruch 10, wobei die Vielzahl von Uplinkressourcen Uplinkdatenressourcen und Uplinksondierungsreferenzsignalressourcen umfasst, und wobei die bestimmte Uplinkdatenressource eine Uplinkdatenressource aus der Vielzahl von Uplinkdatenressourcen ist.

12. Vorrichtung nach Anspruch 11, wobei mit jeder der Uplinkdatenressourcen und/oder der Uplinksondierungsreferenzsignalressourcen mindestens eine Downlinkreferenzsignalressource verknüpft ist.

13. Vorrichtung nach Anspruch 11 oder Anspruch 12, wobei die Uplinkdatenressourcen mindestens eines von gemeinsam verwendeten physischen Configured-Grant-Uplinkkanal(CG PUSCH)-Ressourcen oder physischen Uplinksteuerkanal(PUCCH)-Ressourcen umfassen.

14. Verfahren, das Folgendes umfasst:
Empfangen (650) einer Auslegung für eine Vielzahl von Uplinkressourcen und einen Satz von Uplinksende(Tx)-Strahlen und für mehrere periodische oder semipersistente Sondierungsreferenzsignalressourcen durch eine Teilnehmereinrichtung von einem Netzwerkknoten;
autonomes Bestimmen (670) eines Uplinksende(Tx)-Strahls aus dem Satz von Uplink-Tx-Strahlen;
Bestimmen (680) einer Uplinkdatenressource aus der Vielzahl von Uplinkressourcen und einer Uplinksondierungsreferenzsignalressource; und
Übertragen (685) eines Sondierungsreferenzsignals auf der bestimmten Uplinksondierungsreferenzsignalressource der mehreren periodischen oder semipersistenten Sondierungsreferenzsignalressourcen, um dem Netzwerkknoten den Uplink-Tx-Strahl und/oder die bestimmte Uplinkdatenressource anzuzeigen, die die Teilnehmereinrichtung für eine Uplinkdatenübertragung zu verwenden beabsichtigt.

15. Verfahren, das Folgendes umfasst:
Übertragen (600) einer Auslegung durch einen Netzwerkknoten zu mindestens einer Teilnehmereinrichtung mit einer Vielzahl von Uplinkressourcen und einem Satz von Uplinksende(Tx)-Strahlen und für mehrere periodische oder semipersistente Sondierungsreferenzsignale, um eine autonome Auswahl eines TX-Strahls aus dem Satz von Uplink-Tx-Strahlen durch die Teilnehmereinrichtung zu ermöglichen;
blindes Detektieren (610) eines Sondierungsreferenzsignals auf einer Sondierungsreferenzsignalressource der Vielzahl von Uplinkressourcen; und
Bestimmen (620) einer verknüpften Uplinkdatenressource und/oder eines Uplinkempfangs(Rx)-Strahls auf Basis des detektierten Sondierungsreferenzsignals.

## Revendications

1. Appareil comprenant :
des moyens pour recevoir (650) d'un nœud de réseau une configuration pour une pluralité de ressources de liaison montante et un ensemble de faisceaux de transmission de liaison montante, Tx, et pour de multiples ressources de signaux de référence de sondage périodiques ou semi-persistants ;
des moyens pour déterminer (670) de manière autonome un faisceau de transmission de liaison montante, Tx, de l'ensemble de faisceaux Tx de liaison montante ;
des moyens pour déterminer (680) une ressource de données de liaison montante de la pluralité de ressources de liaison montante et une ressource de signal de référence de sondage de liaison montante ; et
des moyens pour transmettre (685) un signal de référence de sondage sur la ressource de signal de référence de sondage de liaison montante déterminée desdites multiples ressources de signaux de référence de sondage périodiques ou semi-persistants afin d'indiquer au nœud de réseau le faisceau Tx de liaison montante et/ou la ressource de données de liaison montante déterminée que l'appareil a l'intention d'utiliser pour la transmission de données de liaison montante.

2. Appareil selon la revendication 1, comprenant en outre des moyens pour transmettre (685) le signal de référence de sondage en utilisant le faisceau Tx de liaison montante déterminé.

3. Appareil selon la revendication 1 ou la revendication 2, dans lequel au moins une ressource de signal de référence de liaison descendante est associée à chacune des ressources de données de liaison montante et/ou des ressources de signal de référence de sondage de liaison montante.

4. Appareil selon la revendication 1 ou la revendication 2, comprenant en outre des moyens pour sélectionner une ressource de signal de référence de liaison descendante.

5. Appareil selon la revendication 4, comprenant en outre des moyens pour déterminer (670, 680) l'au moins un parmi le faisceau Tx de transmission de liaison montante, la ressource de données de liaison montante ou la ressource de signal de référence de sondage de liaison montante sur la base de la ressource de signal de référence de liaison descendante sélectionnée.

6. Appareil selon les revendications 1 à 5, dans lequel la ressource de données de liaison montante comprend une ressource de canal physique partagé de liaison montante configuré autorisé, PUSCH CG, et/ou une ressource de canal physique de contrôle de liaison montante, PUCCH.

7. Appareil selon les revendications 1 à 6, dans lequel la transmission de données de liaison montante comporte une transmission de canal physique partagé de liaison montante configuré autorisé, PUSCH CG, et/ou une transmission de canal physique de contrôle de liaison montante, PUCCH.

8. Appareil selon les revendications 1 à 7, comprenant en outre des moyens pour recevoir (650) la configuration en recevant une configuration contenant au moins une ressource de signal de référence de liaison descendante associée à chacune des ressources de liaison montante, et/ou au moins une ressource de signal de référence de sondage périodique associée à chaque ressource de liaison montante.

9. Appareil selon les revendications 1 à 8, comprenant en outre des moyens pour déterminer (670) le faisceau Tx de liaison montante en sélectionnant un faisceau Tx de liaison montante et une ressource de signal de référence de liaison descendante correspondante sur la base d'une métrique de sélection.

10. Appareil, comprenant :
des moyens pour transmettre (600) à au moins un équipement utilisateur une configuration pour une pluralité de ressources de liaison montante et un ensemble de faisceaux de transmission de liaison montante, Tx, et pour de multiples signaux de référence de sondage périodiques ou semi-persistants afin de permettre une sélection autonome d'un faisceau Tx de l'ensemble de faisceaux Tx de liaison montante par l'équipement utilisateur ;
des moyens pour détecter en aveugle (610) un signal de référence de sondage sur une ressource de signal de référence de sondage de la pluralité de ressources de liaison montante ; et
des moyens pour déterminer (620) sur la base du signal de référence de sondage détecté, une ressource de données de liaison montante associée et/ou un faisceau de réception de liaison montante, Rx.

11. Appareil selon la revendication 10, dans lequel la pluralité de ressources de liaison montante comprend des ressources de données de liaison montante et des ressources de signal de référence de sondage de liaison montante, et dans lequel la ressource de données de liaison montante déterminée est une ressource de données de liaison montante de la pluralité de ressources de données de liaison montante.

12. Appareil selon la revendication 11, dans lequel au moins une ressource de signal de référence de liaison descendante est associée à chacune des ressources de données de liaison montante et/ou des ressources de signal de référence de sondage de liaison montante.

13. Appareil selon la revendication 11 ou la revendication 12, dans lequel les ressources de données de liaison montante comprennent des ressources de canal physique partagé de liaison montante configuré autorisé, PUSCH CG et/ou des ressources de canal physique de contrôle de liaison montante, PUCCH.

14. Procédé comprenant les étapes suivantes :
recevoir (650) d'un nœud de réseau par un équipement utilisateur, une configuration pour une pluralité de ressources de liaison montante et un ensemble de faisceaux de transmission de liaison montante, Tx, et pour de multiples ressources de signaux de référence de sondage périodiques ou semi-persistants ;
déterminer (670) de manière autonome un faisceau de transmission de liaison montante, Tx, de l'ensemble de faisceaux Tx de liaison montante ;
déterminer (680) une ressource de données de liaison montante de la pluralité de ressources de liaison montante et une ressource de signal de référence de sondage de liaison montante ; et
transmettre (685) un signal de référence de sondage sur la ressource de signal de référence de sondage de liaison montante déterminée desdites multiples ressources de signaux de référence de sondage périodiques ou semi-persistants afin d'indiquer au nœud de réseau le faisceau Tx de liaison montante et/ou la ressource de données de liaison montante déterminée que l'équipement utilisateur a l'intention d'utiliser pour la transmission de données de liaison montante.

15. Procédé comprenant les étapes suivantes :
transmettre (600), par un nœud de réseau, une configuration à au moins un équipement utilisateur avec une pluralité de ressources de liaison montante et un ensemble de faisceaux de transmission de liaison montante, Tx, et pour de multiples signaux de référence de sondage périodiques ou semi-persistants afin de permettre une sélection autonome d'un faisceau Tx de l'ensemble de faisceaux Tx de liaison montante par l'équipement utilisateur ;
détecter en aveugle (610) un signal de référence de sondage sur une ressource de signal de référence de sondage de la pluralité de ressources de liaison montante ; et
déterminer (620) sur la base du signal de référence de sondage détecté, une ressource de données de liaison montante associée et/ou un faisceau de réception de liaison montante, Rx.
